# EUROPEAN PATENT APPLICATION

(11) **EP 4 230 305 A1**
(43) Date of publication of application: **23.08.2023**
(21) Application number: 23156613.4
(22) Date of filing: 14.02.2023
(51) Int. Cl.: B05B 7/22

(54) **THERMAL SPRAYING APPARATUS, METHOD OF DETECTING MOLTEN ADHERED SUBSTANCE IN THERMAL SPRAYING APPARATUS, AND ELECTRODE FOR THERMAL SPRAYING APPARATUS**

(30) Priority: 18.02.2022 JP 2022023668
(71) Applicant: EBARA CORPORATION, Ota-ku, Tokyo 144-8510 (JP)
(72) Inventor: NAITO, Yoshihiko, Tokyo, 1448510 (JP)
(74) Representative: Schmidbauer, Andreas Konrad

(57) **Abstract**

Provided is a thermal spraying apparatus that forms a film on a target by thermally spraying a conductive powder by plasma, the thermal spraying apparatus including: a first electrode provided with a first cavity through which the conductive powder from a powder supplier passes; and a second electrode provided with a second cavity through which the conductive powder from the first electrode passes, in which the plasma is generated between the first electrode and the second electrode.

## Description

### CROSS-REFERENCE TO RELATED APPLICATIONS

This application claims the benefit of Japanese Priority Patent Application JP 2022-023668 filed on February 18, 2022, the entire contents of which are incorporated herein by reference.

### BACKGROUND

### Technical Field

The present disclosure relates to a thermal spraying apparatus, a method of detecting a molten adhered substance in the thermal spraying apparatus, and an electrode for the thermal spraying apparatus.

### Related Art

A thermal spraying apparatus forms a film on a target by thermally spraying a powder by plasma generated between electrodes. When the powder is thermally sprayed, a melt may adhere to the electrodes.

### Citation List

### Patent Literature

Patent Literature 1: JP 53-119211 A
Patent Literature 2: JP 2008-80323 A
Patent Literature 3: JP 59-202143 A

### SUMMARY

One object of the present disclosure is to provide a thermal spraying apparatus capable of detecting adhesion of a melt of a conductive powder at an early stage, a method capable of detecting adhesion of a melt of a conductive powder at an early stage in the thermal spraying apparatus, and an electrode for the thermal spraying apparatus capable of shortening a maintenance time of the thermal spraying apparatus even when the melt adheres.

According to one aspect,
provided is a thermal spraying apparatus that forms a film on a target by thermally spraying a conductive powder by plasma, the thermal spraying apparatus including:
   a first electrode provided with a first cavity through which the conductive powder from a powder supplier passes; and
   a second electrode provided with a second cavity through which the conductive powder from the first electrode passes,
   in which the plasma is generated between the first electrode and the second electrode,
the second electrode includes:
   an electrode body; and
   a muzzle portion provided with the second cavity through which the conductive powder from the first electrode passes, the muzzle portion being attachable to and detachable from the electrode body,
the muzzle portion includes:
   one or more insulating members; and
   a plurality of conductive members insulated from each other by the one or more insulating members, and
   the thermal spraying apparatus includes an adhered substance detector that detects adhesion of a melt of the conductive powder according to whether or not two or more conductive members among the plurality of conductive members are conductive.

The electrode body may be provided with a third cavity into which the muzzle portion is fitted, and
the muzzle portion may be detachably fitted into the third cavity.

A screw hole penetrating from an outer surface of the electrode body to an inner surface of the third cavity may be provided, and
the muzzle portion fitted into the third cavity of the electrode body through the screw hole may be screwed.

A female screw may be provided on the inner surface of the third cavity, and
a male screw may be provided on a side surface of the muzzle portion.

The muzzle portion may include:
a fitting portion provided with the male screw; and
a sensor attached to a lower end surface of the fitting portion, the sensor including the one or more insulating members and the plurality of conductive members.

A distal end surface of the muzzle portion may have an annular shape, and the distal end surface may include:
the plurality of insulating members extending in a radial direction from an inner periphery to an outer periphery of the distal end surface; and
the plurality of conductive members provided between the plurality of insulating members.

A distal end surface of the muzzle portion may have an annular shape, and the distal end surface may include:
an annular portion that is one of the plurality of conductive members and is provided with a recess on an inner peripheral surface;
an electrode portion that is another conductive member among the plurality of conductive members and is provided within the recess; and
the one or more insulating members provided within the recess so as to insulate the annular portion and the electrode portion from each other.

The conductive members may include copper, tungsten, or tantalum, and
the one or more insulating members may include ceramic.

According to another aspect,
provided is a method of detecting adhesion of a melt of a conductive powder to an electrode for a thermal spraying apparatus,
the electrode including:
   an electrode body; and
   a muzzle portion attachable to and detachable from the electrode body,
the muzzle portion including:
   an insulating member; and
   a plurality of conductive members insulated from each other by the insulating member,
the molten adhered substance detecting method including
   detecting adhesion of the melt of the conductive powder depending on whether or not two or more conductive members among the plurality of conductive members are conductive.

According to another aspect,
provided is an electrode for a thermal spraying apparatus, the electrode including:
   an electrode body; and
   a muzzle portion attachable to and detachable from the electrode body,
in which the muzzle portion includes:
   an insulating member; and
   a plurality of conductive members insulated from each other by the insulating member.

The adhesion of the melt of the conductive powder can be detected early. Furthermore, even when the melt adheres, the maintenance time of the thermal spraying apparatus can be shortened.

### BRIEF DESCRIPTION OF DRAWINGS

FIG. 1 is a schematic configuration diagram of a thermal spraying apparatus according to an embodiment;
FIG. 2A is a schematic diagram of an anode 32 according to a first embodiment;
FIG. 2B is a perspective view illustrating a state in which a muzzle portion 321 of FIG. 2A is fitted to an anode body 320;
FIG. 3A is a diagram schematically illustrating a configuration of an adhered substance detector 10;
FIG. 3B is a diagram schematically illustrating a configuration of the adhered substance detector 10;
FIG. 4A is a schematic diagram of an anode 32' according to a second embodiment;
FIG. 4B is a perspective view illustrating a state in which a sensor 34 of FIG. 4A is attached to a fitting portion 33;
FIG. 4C is a perspective view illustrating a state in which the fitting portion 33 to which the sensor 34 of FIG. 4B is attached is fitted to an anode body 320';
FIG. 5 is a diagram schematically illustrating a configuration of an adhered substance detector 10';
FIG. 6A is a schematic diagram of an anode 32'' according to a third embodiment;
FIG. 6B is a perspective view illustrating a state in which a muzzle portion 321'' of FIG. 6A is fitted to an anode body 320";
FIG. 6C is a bottom view of the muzzle portion 321'' of FIG. 6A;
FIG. 6D is an exploded bottom view of the muzzle portion 321'' of FIG. 6A;
FIG. 7 is a diagram schematically illustrating a configuration of an adhered substance detector 10";
FIG. 8 is a diagram illustrating a schematic configuration of a thermal spraying system;
FIG. 9A is a diagram illustrating a state in which no melt adheres to a muzzle portion 321'; and
FIG. 9B is a diagram illustrating a state in which a conductive melt 90 adheres to the muzzle portion 321'.

### DETAILED DESCRIPTION

Hereinafter, embodiments according to the present disclosure will be specifically described with reference to the drawings.

### (First embodiment)

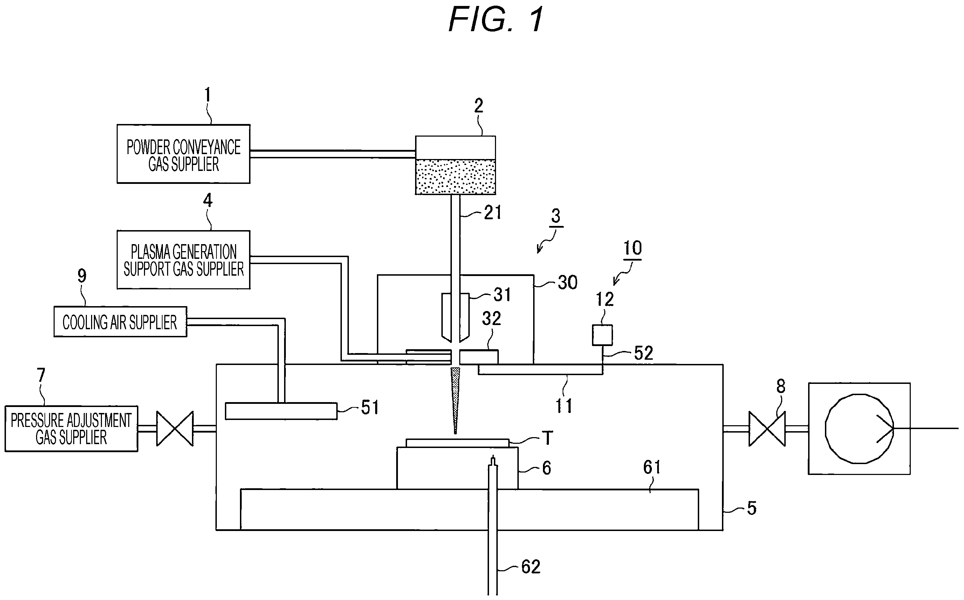

FIG. 1 is a schematic configuration diagram of a thermal spraying apparatus according to an embodiment. A thermal spraying apparatus includes a powder conveyance gas supplier 1, a powder feeder 2 (feeder), a thermal spraying nozzle 3, a plasma generation support gas supplier 4, a chamber 5, a holder 6, a pressure adjustment gas supplier 7, an exhaust pump 8, a cooling air supplier 9, and an adhered substance detector 10, and performs film formation on a target T held on the holder 6 in the chamber 5.

The powder conveyance gas supplier 1 supplies a powder conveyance gas to the powder feeder 2. The powder conveyance gas is, for example, argon or nitrogen, and may be the same as or different from a plasma generation support gas described later.

The powder feeder 2 supplies the conductive powder using the powder conveyance gas. A material derived from the conductive powder is deposited on the target T. As an example, the conductive powder is a copper powder, and a copper thin film is formed on the target T.

The thermal spraying nozzle 3 is also called a thermal spray gun, and melts and sprays (thermally sprays) the conductive powder to the target T. The thermal spraying nozzle 3 includes a housing 30, a cathode 31 (first electrode), and an anode 32 (second electrode).

The housing 30 houses the cathode 31 and the anode 32. A powder guide path 21 that guides the powder from the powder feeder 2 to the cathode 31 penetrates an upper surface of the housing 30. Furthermore, an opening is provided on a lower surface of the housing 30 and faces the holder 6.

The cathode 31 is disposed on a downstream side (lower side) of the powder feeder 2. A cavity (first cavity) is formed inside the cathode 31, and the conductive powder from the powder feeder 2 passes through the cavity via the powder guide path 21.

The anode 32 is disposed downstream (below) of the cathode 31 and spaced apart from the cathode 31. A cavity (second cavity) is formed inside the anode 32. This cavity is located below the cavity of the cathode 31 and above the opening in the lower surface of the housing 30. Then, the conductive powder from the cathode 31 passes through the inside of the cavity in the anode 32. Details of the configuration of the anode 32 will be described later.

The plasma generation support gas supplier 4 supplies the plasma generation support gas into the housing 30 of the thermal spraying nozzle 3. The plasma generation support gas is, for example, argon or a gas obtained by adding hydrogen to argon.

The chamber 5 is disposed below the thermal spraying nozzle 3. An opening is provided on an upper surface of the chamber 5, and is aligned with the opening of the lower surface of the housing 30 in the thermal spraying nozzle 3. The holder 6 that holds the target T is disposed below the opening. The holder 6 is placed on an XY slider 61 (stage), and the XY slider 61 can move the holder 6 in a horizontal plane. Furthermore, the holder 6 is provided with a thermocouple 62 to monitor a temperature of the XY slider 61 and a temperature of the target T.

In particular, since the target T is destroyed by heat when the temperature of the target T becomes too high, the temperature of the target T is monitored by the thermocouple 62 so as not to reach a temperature Tmax at which the target T is destroyed. Actually, a temperature Ts lower than Tmax is set in consideration of safety, and control to stop plasma spraying is performed when the temperature of the thermocouple 62 reaches Ts. Furthermore, in a case where the film formation by plasma spraying is halfway, it is necessary to restart plasma spraying. Therefore, a reference temperature T1 for restarting the plasma spraying is set, the temperature of the target T is monitored by the thermocouple 62, and the plasma spraying is restarted when the temperature decreases to the reference temperature T1.

The chamber 5 is connected to the pressure adjustment gas supplier 7, the exhaust pump 8, and the cooling air supplier 9 in order to appropriately control the thermal spray environment at the time of thermally spraying the melted conductive powder onto the target T. The pressure adjustment gas supplier 7 supplies a pressure adjustment gas such as argon or a gas obtained by adding hydrogen to argon into the chamber 5, and maintains a pressure in the chamber 5 at a constant value (for example, 300 Torr). The exhaust pump 8 evacuates the inside of the chamber 5. The cooling air supplier 9 supplies cooling air to a cooling plate 51 disposed in the chamber 5.

Note that the plasma generation support gas may be gas other than argon or a gas obtained by adding hydrogen to argon. For example, the gas may be a gas required for use in a process, such as neon, helium, or nitrogen.

In such a thermal spraying apparatus, a voltage is applied such that a high potential difference is generated between the cathode 31 and the anode 32 in a state where the plasma generation support gas is supplied into the housing 30 of the thermal spraying nozzle 3. As a result, arc discharge occurs between the cathode 31 and the anode 32. Plasma is generated between the cathode 31 and the anode 32 due to the arc discharge, and the conductive powder from the powder feeder 2 is melted (liquefied) by the heat. The melted conductive powder (liquid powder) is sprayed onto the target T to form a film.

Here, when the conductive powder is thermally sprayed, the melt may adhere to the anode 32. If the adhered substance is small, there is no problem. However, for example, if a large melt adheres to the cavity of the anode 32, a thermal spray amount is not stabilized, and the film thickness formed on the target T may vary. Moreover, if the melt adheres to such an extent as to close the cavity of the anode 32, thermal spraying may not be possible. In such a case, if the entire thermal spraying nozzle 3 has to be replaced, it takes time to maintain the thermal spraying apparatus.

Therefore, in the present embodiment, the adhered substance detector 10 is provided in the thermal spraying apparatus so that the adhesion of the melt of the conductive powder can be detected at an early stage. Furthermore, in the present embodiment, the anode 32 is configured such that the entire thermal spraying nozzle 3 does not need to be replaced even when the melt adheres. Details will be described below.

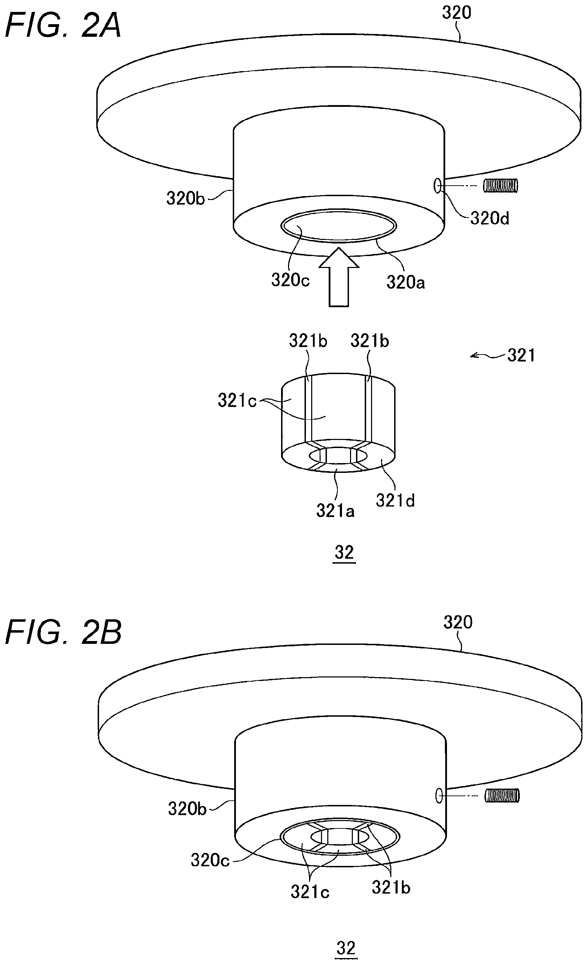

FIG. 2A is a schematic diagram of the anode 32 according to a first embodiment. The anode 32 includes an anode body 320 (electrode body) and a muzzle portion 321 being attachable to and detachable from the anode body 320.

The anode body 320 has a columnar portion 320b whose inside is a cavity 320a (third cavity). An inner surface of the columnar portion 320b in the anode body 320 is formed of an insulating material 320c, and the other portions are formed of a conductive material such as metal to constitute an electrode.

The muzzle portion 321 is a member provided on a side opposite to the cathode 31 and having an opening portion through which plasma and molten conductive powder are ejected in the cavity 320a of the anode body 320.

The muzzle portion 321 has a substantially cylindrical shape having a cavity 321a (second cavity) inside, and is fitted into the cavity 320a of the anode body 320 (see FIG. 2B). As an example, a screw hole 320d penetrating from an outer surface to an inner surface of the columnar portion 320b of the anode body 320 is provided, and the muzzle portion 321 fitted in the cavity 320a of the anode body 320 is screwed via the screw hole 320d.

The muzzle portion 321 includes an insulating member 321b and a plurality of conductive members 321c insulated from each other by the insulating member 321b. In FIGS. 2A and 2B, as an example, four insulating members 321b spaced apart from each other and four conductive members 321c provided between the insulating members 321b are provided. Note that, as the insulating member 321b, a heat-resistant ceramic, particularly a free-cutting ceramic or the like is suitable. Furthermore, as the conductive member 321c, heat resistant copper, tungsten, tantalum, or the like is suitable.

A distal end surface 321d (In FIG. 1, a surface on a lower end side facing the target T) of the muzzle portion 321 has an annular shape. The distal end surface 321d includes (lower end surfaces of) a plurality of substantially rectangular insulating members 321b extending in a radial direction from a part of an inner circumference to a part of an outer circumference thereof, and (lower end surfaces of) a plurality of annular sector conductive members 321c provided between the plurality of insulating members 321b. Each of the insulating members 321b and each of the conductive members 321c extend to the upper surface of the muzzle portion 321. Therefore, the horizontal cross section of the muzzle portion 321 has the same configuration as the distal end surface 321d.

It can also be said that each of the insulating members 321b and the conductive members 321c constitutes a part of the inner surface, a part of the outer surface, a part of the lower surface (distal end surface 321d), and a part of the upper surface of the muzzle portion 321. Note that each of the conductive members 321c of the muzzle portion 321 is insulated from the conductive material of the anode body 320 by the insulating materials 320c on the inner surface of the anode body 320.

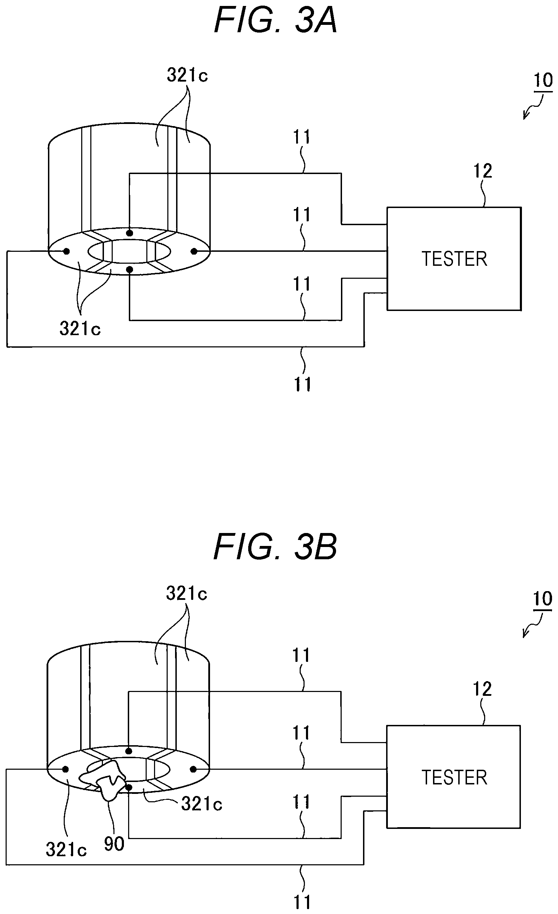

FIGS. 3A and 3B are diagrams schematically illustrating a configuration of the adhered substance detector 10. The adhered substance detector 10 detects the adhesion of the melt of the conductive powder to the muzzle portion 321 depending on whether or not two or more conductive members 321c in the plurality of conductive members 321c of the muzzle portion 321 are conductive.

Specifically, the adhered substance detector 10 includes a conductive wire 11 connected to each of the conductive members 321c and a tester 12 connected to the conductive wire 11 to monitor a conduction state between the conductive members 321c. Note that in FIG. 1, the conductive wire 11 may be drawn out to an outside of the chamber 5 via a feed-through 52 provided in the chamber 5 and connected to the tester 12 provided outside the chamber 5.

As illustrated in FIG. 3A, in a case where the melt of the conductive powder does not adhere to the muzzle portion 321, conduction is not established between any of the conductive members 321c. As a result, it can be seen that the melt of the conductive powder does not adhere to the muzzle portion 321 (Alternatively, even if adhered, it is a small adhered substance.).

On the other hand, as illustrated in FIG. 3B, in a case where a melt 90 of the conductive powder adheres across the plurality of conductive members 321c in the muzzle portion 321, the corresponding conductive members 321c are electrically connected to each other. As a result, it can be seen that the melt 90 of the conductive powder adheres to the muzzle portion 321. In this case, for example, an alarm may be issued to a control panel (not illustrated).

As is clear from FIGS. 3A and 3B, as the conductive members 321c are provided more (as the conductive members 321c are finely divided), a smaller adhered substance can be detected. Therefore, the larger the number of the conductive members 321 (electrodes), the better the sensitivity to the adhered substance, and thus it is desirable to set the number of the conductive members to 4 to 6 in practice.

As described above, in the first embodiment, the anode 32 includes the anode body 320 and the muzzle portion 321 detachably attached to the anode body, and the plurality of conductive members 321c insulated from each other is provided in the muzzle portion 321. The adhered substance detector 10 that monitors the conduction between the conductive members 321c can detect the adhesion at an early stage when the melt of the conductive powder adheres across the plurality of conductive members 321c. In a case where adhesion is detected, only the muzzle portion 321 of the anode 32 may be replaced instead of the entire thermal spraying nozzle 3, and the maintenance time can be shortened.

### (Second embodiment)

A second embodiment to be described next is a modification example of the anode 32 in the first embodiment. Hereinafter, description of common points with the first embodiment may be omitted or simplified.

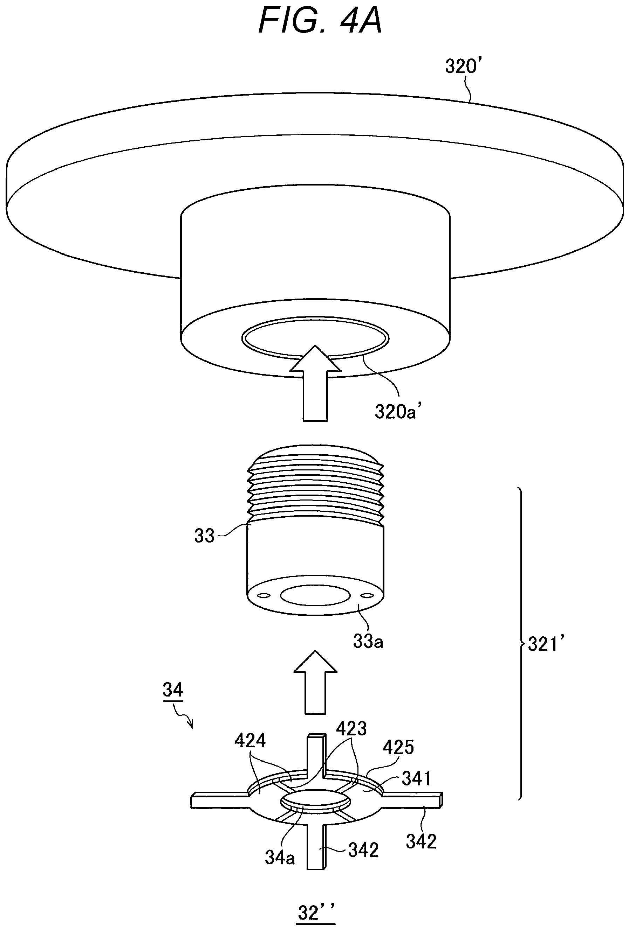

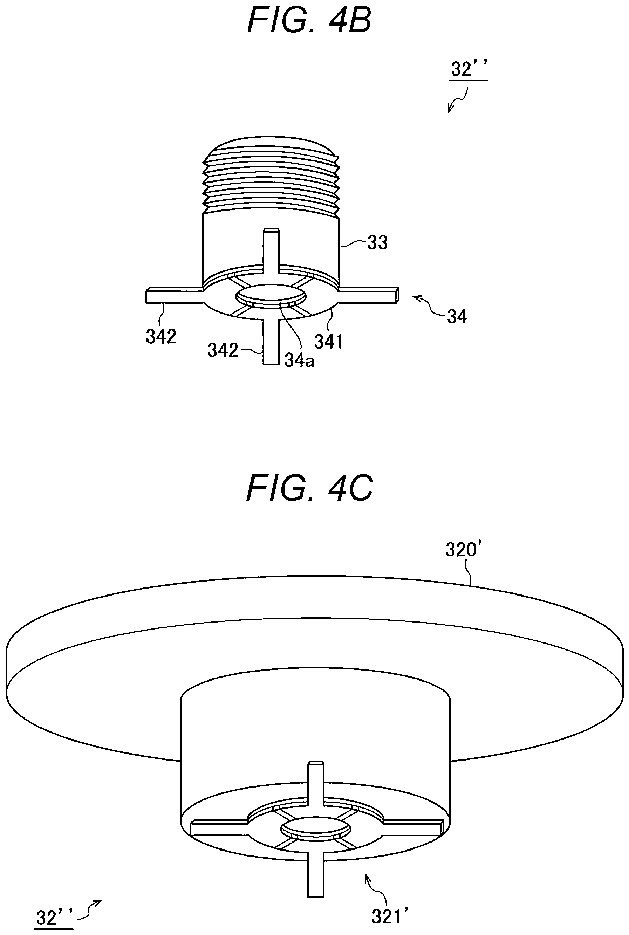

FIG. 4A is a schematic diagram of an anode 32' according to the second embodiment. The anode 32' has an anode body 320' (electrode body) and a muzzle portion 321' detachably attached to the anode body 320', and the muzzle portion 321' has a fitting portion 33 and a sensor 34. The sensor 34 is attached to a lower end surface (surface on a side of the target T) of the fitting portion 33 (see FIG. 4B), and the fitting portion 33 is fitted into a cavity 320a' of the anode body 320' (see FIG. 4C).

The anode body 320' is substantially similar to that described in the first embodiment, but in the present embodiment, a female screw (not illustrated) is provided on an inner surface of the cavity 320a' (third cavity).

The fitting portion 33 of the muzzle portion 321' has a substantially cylindrical shape in which the inside is a cavity 33a. A male screw is provided on an upper (cathode side) side surface of the fitting portion 33. Since the fitting portion 33 is a part of the muzzle portion 321', it can be said that a male screw is provided in the muzzle portion 321'. Then, the fitting portion 33 is screwed into the cavity 320a' of the anode body 320', whereby the muzzle portion 321' is fitted into the cavity 320a' of the anode body 320' (see FIG. 4C). Furthermore, the fitting portion 33 is formed of a conductive material.

The sensor 34 of the muzzle portion 321' has an annular portion 341, and may have a protruding portion 342 protruding in the radial direction from an outer periphery of the annular portion 341.

An outer diameter of the annular portion 341 is substantially the same as an outer diameter of the lower end surface of the fitting portion 33 (see FIG. 4B). As an example, screw holes are provided in lower end surfaces of the annular portion 341 and the fitting portion 33, and the annular portion 341 of the sensor 34 is screwed to the lower end surface of the fitting portion 33 through these screw holes.

The annular portion 341 has a cavity 34a (second cavity) inside (an opening is formed), and includes an insulating member 423 and a plurality of conductive members 424 insulated from each other by the insulating member 423. In FIGS. 4A to 4C, as an example, four insulating members 423 spaced apart from each other and four conductive members 424 provided between the insulating members 423 are provided.

Specifically, the annular portion 341 (also referred to as a distal end surface of the muzzle portion 321') includes a plurality of substantially rectangular insulating members 423 extending in the radial direction from a part of an inner circumference to a part of an outer circumference thereof, a plurality of annular sector conductive members 424 provided between the plurality of insulating members 423, and an insulating member 425 provided on an upper surface of the annular portion 341. It can also be said that each of the insulating members 423 and the conductive members 424 constitutes a part of the inner peripheral surface, a part of the outer peripheral surface, and a part of the lower surface of the annular portion 341, and the insulating member 425 constitutes the upper surface of the annular portion 341. Note that each of the conductive members 424 of the muzzle portion 321' is insulated from the fitting portion 33 by the insulating member 425. Furthermore, the protruding portion 342 protrudes from each of the conductive members 424.

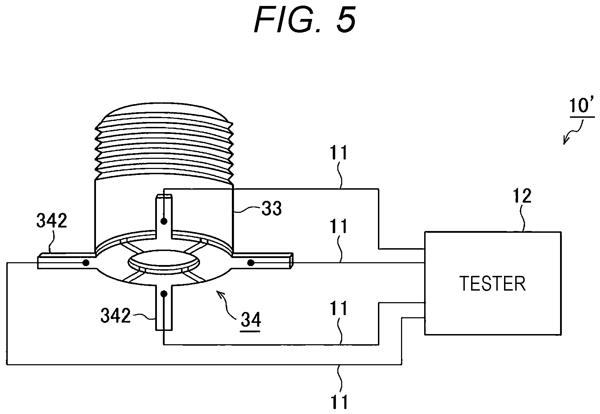

FIG. 5 is a diagram schematically illustrating a configuration of an adhered substance detector 10'. The configuration of the adhered substance detector 10 'is substantially the same as that of the first embodiment, but the conductive wire 11 may be connected to the protruding portion 342. The conductive wire 11 is easily connected by providing the protruding portion 342.

As described above, also in the second embodiment, the adhesion of the melt of the conductive powder can be detected at an early stage. In a case where adhesion is detected, it is sufficient to replace not the entire thermal spraying nozzle 3 but only the sensor 34 in the muzzle portion 321' of the anode 32', and the maintenance time can be shortened.

### (Third embodiment)

A third embodiment described below is another modification example of the anode 32 in the first embodiment. Hereinafter, description of common points between the first embodiment and the second embodiment may be omitted or simplified.

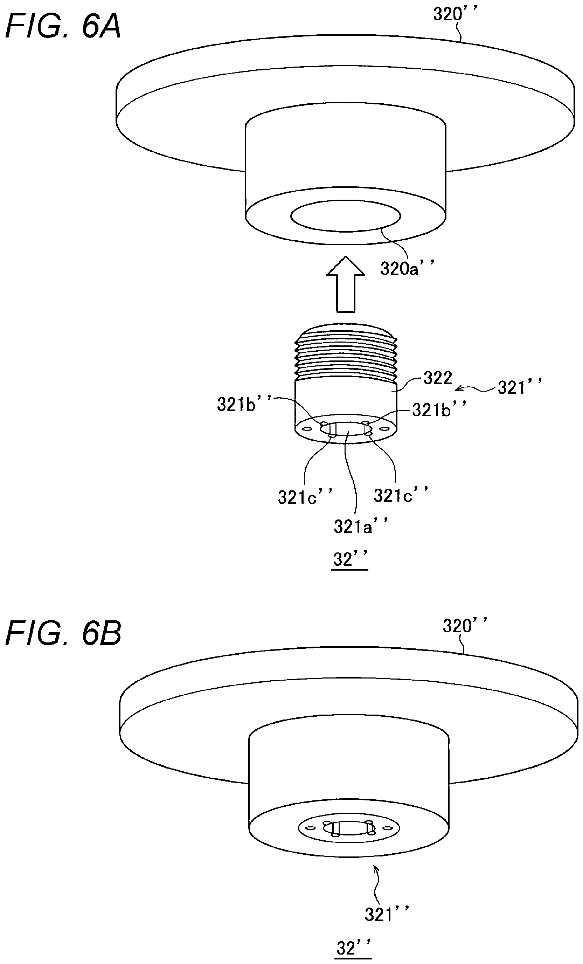

FIG. 6A is a schematic diagram of an anode 32'' according to the third embodiment. The anode 32'' has an anode body 320'' (electrode body) and a muzzle portion 321'' detachably attached to the anode body 320''.

The anode body 320'' is similar to that described in the second embodiment.

The muzzle portion 321'' has a substantially cylindrical shape whose inside is a cavity 321a'' (second cavity). A male screw is provided on an upper (cathode side) side surface of the muzzle portion 321". The muzzle portion 321'' is screwed into a cavity 320a'' of the anode body 320'', whereby the muzzle portion 321'' is fitted into the cavity 320a'' of the anode body 320'' (see FIG. 6B). The muzzle portion 321'' is formed of a conductive material except for an insulating member 321b'' described later.

The muzzle portion 321'' includes an insulating member 321b'' and a plurality of conductive members 321c'' and 322 insulated from each other by the insulating member 321b'' .

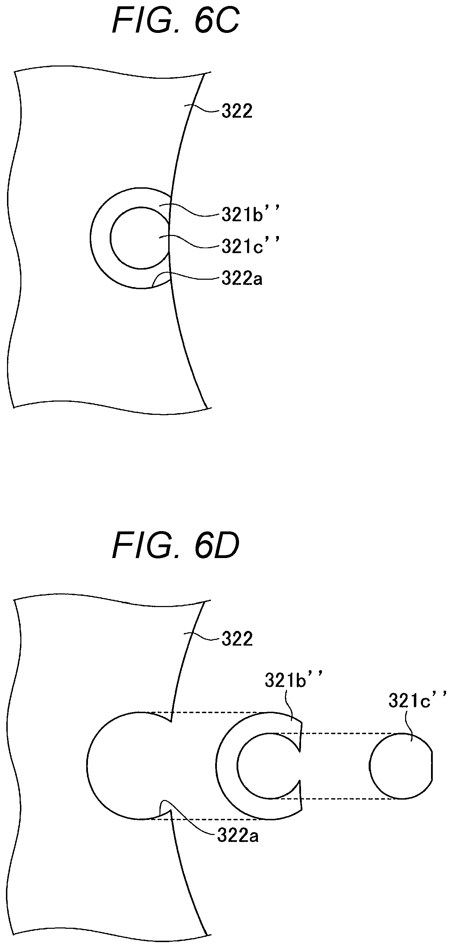

FIG. 6C is a partially enlarged view of the muzzle portion 321'' as viewed from below. Furthermore, FIG. 6D is an exploded view illustrating a lower portion of the muzzle portion 321''. A distal end surface (lower end surface) of the muzzle portion 321'' has an annular shape. The distal end surface includes an annular conductive member 322 (annular portion) provided with one or more recesses 322a (four in the example of FIG. 6A) on an inner periphery thereof, the conductive member 321c"' as an electrode portion (metal electrode) provided in the recess 322a, and the insulating member 321b'' provided so as to insulate the annular conductive member 322 and the conductive member 321c'' in the recess 322a.

As a specific example, the recess 322a has a shape in which a part of a circle is cut out. The insulating member 321b'' is a crescent-shaped sleeve. An outer periphery of the insulating member 321b'' has substantially the same size as an inner diameter of the recess 322a, and is fitted with the inner diameter of the recess 322a. The conductive member 321c'' has a shape in which a part of a circle is cut out linearly. The outer periphery of the conductive member 321c' ' has substantially the same size as an inner periphery of the insulating member 321b'', and is fitted to the inner periphery of the insulating member 321b''. The insulating member 321b'' and the conductive member 321c'' in each of the recesses 322a extend to the middle or upper surface of the muzzle portion 321". The conductive member 322 extends upward and has a columnar shape.

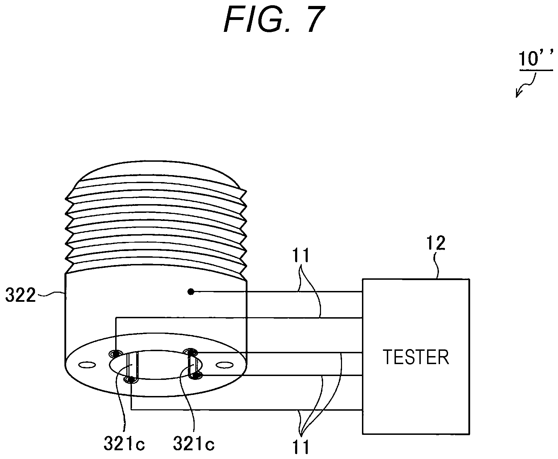

FIG. 7 is a diagram schematically illustrating a configuration of an adhered substance detector 10''. The configuration of the adhered substance detector 10'' is substantially the same as that of the first embodiment, but the conductive wire 11 may be connected not only to the conductive member 321c"' as the electrode portion but also to the conductive member 322. Accordingly, not only in a case where the melt of the conductive powder adheres across the plurality of conductive members 321c'', but also in a case where the melt of the conductive powder adheres across one conductive member 321c"' and one conductive member 322, the adhesion can be detected.

As described above, also in the third embodiment, the adhesion of the melt of the conductive powder can be detected at an early stage. In a case where adhesion is detected, only the muzzle portion 321'' of the anode 32'' may be replaced instead of the entire spray nozzle, and the maintenance time can be shortened.

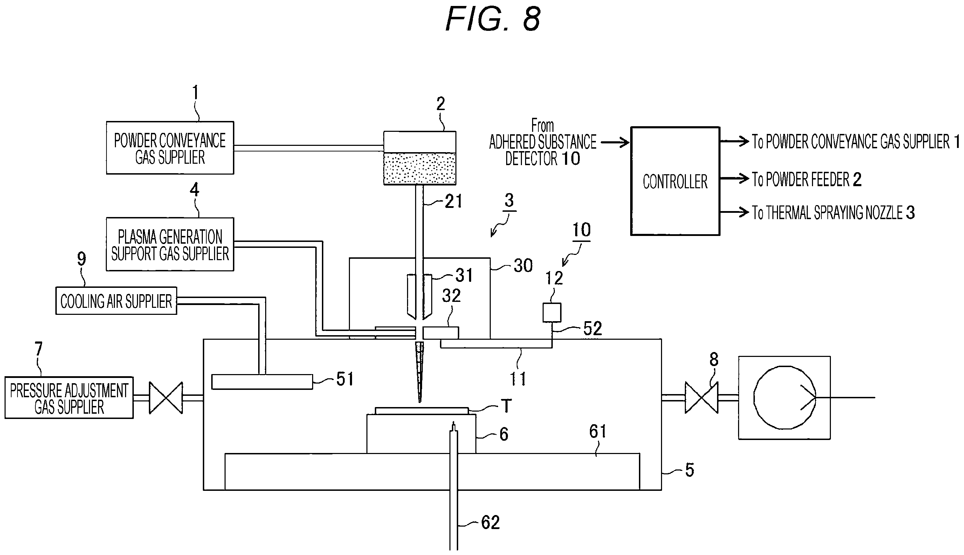

In each of the embodiments described above, a thermal spraying system as illustrated in FIG. 8 can be constructed. The thermal spraying system of FIG. 8 includes a controller 100 in addition to the thermal spraying apparatus illustrated in FIG. 1.

Referring to FIG. 8, the controller 100 can receive a measurement result signal received by the adhered substance detector 10 that detects an adhesion amount in the muzzle portion 321, and controls the powder conveyance gas supplier 1, the powder feeder 2, and the thermal spraying nozzle 3 (via a power supply unit 3') of the thermal spraying apparatus.

In one embodiment, in a case where the measurement result signal from the adhered substance detector 10 indicates that the conductive powder melt adheres to the muzzle portion 321, an alarm may be issued to the control panel. Furthermore, the controller 100 may determine the replacement time of the muzzle portion 321 based on the measurement result signal.

In one example, the controller 100 continuously measures the presence or absence of an adhesion substance in the muzzle portion 321, and controls an amount of applied voltage by which a high potential difference is generated between the cathode 31 and the anode 32 by a feedback loop to control an amount of melting of the conductive powder per unit time.

In one embodiment, after detecting an adhesion substance in the muzzle portion 321 for the first time, the controller 100 stops the supply of the powder conveyance gas and outputs a control signal to the powder conveyance gas supplier 1 so as to stop the thermal spraying. Then, until the second detection of the adhered substance, the controller 100 maintains an applied voltage amount that generates a high potential difference between the cathode 31 and the anode 32 so as to continue melting of the conductive powder. Then, after receiving a second detection signal of the adhered substance from the sensor, the controller 100 may stop the subsequent thermal spraying processing when the processing is continuously performed on the plurality of targets.

As a result, it is possible to distinguish between a case where the adhered substance detector 10 itself malfunctions due to a failure and a case where the adhered substance detector can correctly detect the adhesion of the melt.

In another embodiment, the controller 100 may set an allowable adhesion amount of the adhesion amount in the muzzle portion 321 in advance, determine that the thermal spraying may be continued as it is when the adhesion amount is less than or equal to the allowable value, and control the thermal spraying apparatus to continue the thermal spraying.

Note that, in each of the embodiments described above, the adhesion of the melt of the conductive powder to the muzzle portion is detected depending on whether or not two or more conductive members are conductive. As a modification example, the adhesion of the melt may be detected by a change in capacitance between the conductive members. Hereinafter, the anode 32' (FIG. 4A and the like) described in the second embodiment will be described as an example.

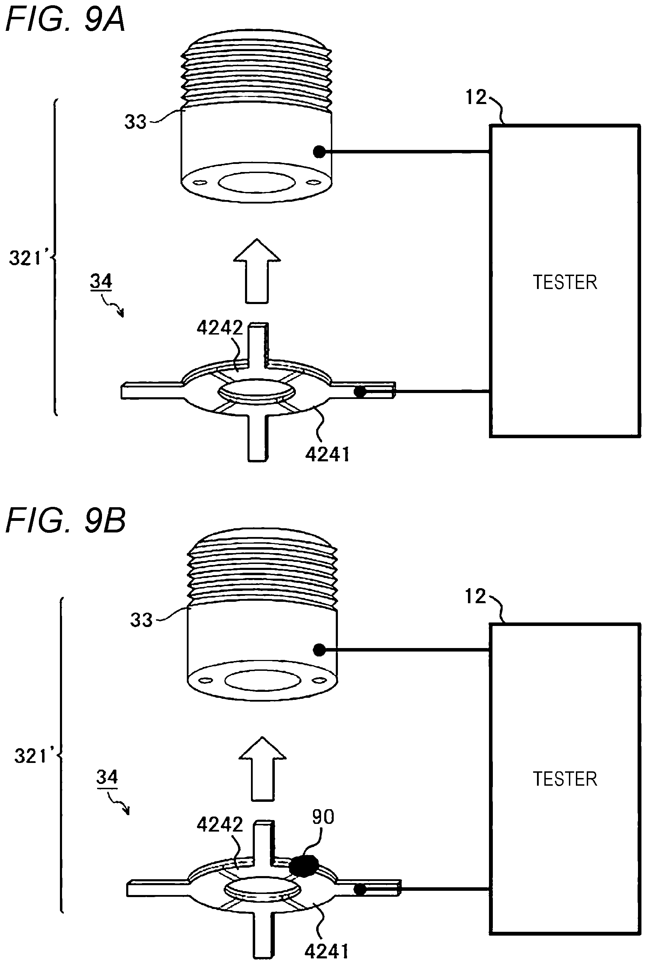

FIG. 9A illustrates a state in which no melt adheres to the muzzle portion 321'. At this time, it is assumed that the electrostatic capacitance between the fitting portion 33 and one conductive member 4241 in the sensor 34 is C1 (known value). The capacitance C1 is proportional to an area when the conductive member 4241 is considered as an electrode.

FIG. 9B illustrates a state in which the conductive melt 90 adheres to the muzzle portion 321'. At this time, the capacitance between the fitting portion 33 and the conductive member 4241 measured by the tester 12 has a value C1' different from C1. This is because the area of the electrode varies depending on the melt (For example, the conductive member 4241 and another adjacent conductive member 4242 are short-circuited to increase the area of the electrode.). Therefore, in a case where a difference C1' - C1 exceeds a reference value C0, the tester 12 can determine that the melt adheres.

The above-described embodiments have been described for the purpose of enabling a person having ordinary knowledge in the technical field to which the present invention belongs to implement the present invention. Various modification examples of the above embodiments can be naturally made by those skilled in the art, and the technical idea of the present invention can be applied to other embodiments. Therefore, the present invention is not limited to the described embodiments, and should be the widest scope according to the technical idea defined by the claims.

### Reference Signs List

1 powder conveyance gas supplier
2 powder feeder
21 powder guide path
3 thermal spraying nozzle
30 housing
31 cathode
32, 32', 32'' anode
320, 320', 320'' anode body
320a, 320a', 320a'' cavity
320b columnar portion
320c insulating material
320d screw hole
321, 321', 321" ' muzzle portion
321a, 321a", 34a cavity
321b, 423, 425, 321b' ' insulating member
321c, 424, 321c'', 322 conductive member
321d distal end surface
322a recess
33 fitting portion
33a cavity
34 sensor
341 annular portion
342 protruding portion
4 plasma generation support gas supplier
5 chamber
51 cooling plate
52 feed-through
6 holder
61 XY slider
62 thermocouple
7 pressure adjustment gas supplier
8 exhaust pump
9 cooling air supplier
10, 10', 10'' adhered substance detector
11 conducting wire
12 tester
90 melt of conductive powder

## Claims

1. A thermal spraying apparatus that forms a film on a target by thermally spraying a conductive powder by plasma, the thermal spraying apparatus comprising:
a first electrode provided with a first cavity through which the conductive powder from a powder supplier passes; and
a second electrode provided with a second cavity through which the conductive powder from the first electrode passes,
wherein the plasma is generated between the first electrode and the second electrode,
the second electrode includes:
an electrode body; and
a muzzle portion provided with the second cavity through which the conductive powder from the first electrode passes, the muzzle portion being attachable to and detachable from the electrode body,
the muzzle portion includes:
one or more insulating members; and
a plurality of conductive members insulated from each other by the one or more insulating members, and
the thermal spraying apparatus includes an adhered substance detector that detects adhesion of a melt of the conductive powder according to whether or not two or more conductive members among the plurality of conductive members are conductive.

2. The thermal spraying apparatus according to claim 1, wherein
the electrode body is provided with a third cavity into which the muzzle portion is fitted, and
the muzzle portion is detachably fitted into the third cavity.

3. The thermal spraying apparatus according to claim 2, wherein
a screw hole penetrating from an outer surface of the electrode body to an inner surface of the third cavity is provided, and
the muzzle portion fitted into the third cavity of the electrode body through the screw hole is screwed.

4. The thermal spraying apparatus according to claim 2, wherein
a female screw is provided on the inner surface of the third cavity, and
a male screw is provided on a side surface of the muzzle portion.

5. The thermal spraying apparatus according to claim 4, wherein
the muzzle portion includes:
a fitting portion provided with the male screw; and
a sensor attached to a lower end surface of the fitting portion, the sensor including the one or more insulating members and the plurality of conductive members.

6. The thermal spraying apparatus according to claim 1, wherein
a distal end surface of the muzzle portion has an annular shape, and the distal end surface includes:
the plurality of insulating members extending in a radial direction from an inner periphery to an outer periphery of the distal end surface; and
the plurality of conductive members provided between the plurality of insulating members.

7. The thermal spraying apparatus according to claim 1, wherein
a distal end surface of the muzzle portion has an annular shape, and the distal end surface includes:
an annular portion that is one of the plurality of conductive members and is provided with a recess on an inner peripheral surface;
an electrode portion that is another conductive member among the plurality of conductive members and is provided within the recess; and
the one or more insulating members provided within the recess so as to insulate the annular portion and the electrode portion from each other.

8. The thermal spraying apparatus according to claim 1, wherein
the conductive members includes copper, tungsten, or tantalum, and
the one or more insulating members include ceramic.

9. A method of detecting adhesion of a melt of a conductive powder to an electrode for a thermal spraying apparatus,
the electrode including:
an electrode body; and
a muzzle portion attachable to and detachable from the electrode body,
the muzzle portion including:
an insulating member; and
a plurality of conductive members insulated from each other by the insulating member,
the method comprising
detecting adhesion of the melt of the conductive powder depending on whether or not two or more conductive members among the plurality of conductive members are conductive.

10. An electrode for a thermal spraying apparatus, the electrode comprising:
an electrode body; and
a muzzle portion attachable to and detachable from the electrode body,
wherein the muzzle portion includes:
an insulating member; and
a plurality of conductive members insulated from each other by the insulating member.
